# EUROPEAN PATENT APPLICATION

(11) **EP 1 336 526 A2**
(43) Date of publication of application: **20.08.2003**
(21) Application number: 03002602.5
(22) Date of filing: 07.02.2003
(51) Int. Cl.: B60K 31/00, B60T 7/22

(54) **Automatic running control method, system, and ACC controller for automotive vehicle**

(30) Priority: 18.02.2002 JP 2002039718
(71) Applicant: Hitachi, Ltd., Chiyoda-ku, Tokyo 101-8010 (JP)
(72) Inventor: Manaka, Toshio, Hitachinaka-shi, Ibaraki 312-0052 (JP); Kan, Rina, Mito-shi, Ibaraki 310-0836 (JP)
(74) Representative: Beetz & Partner Patentanwälte

(57) **Abstract**

The invention relates to an ACC (2) of an automatic running control system which is provided with a constant speed control means (43) and a headway distance control means (42). The ACC (2) detects information on a headway distance from a preceding vehicle and a relative speed fed from a radar (1) and, when the detected headway distance is a predetermined value or less, uses a control mode selector means (41) to select the headway distance control mode. When the condition of brake operation is switched from being operated to not being operated, the ACC (2) restores a vehicle speed to a predetermined target vehicle speed (V0) using a vehicle-restoring rate in accordance with a rate of releasing a brake pedal (5) as operated by the driver.

## Description

### BACKGROUND OF THE INVENTION

The present invention relates to an automatic running control method and system involving constant speed control and headway distance control for automotive vehicles.

Japanese Patent Laid-open No. 4-38600 discloses a running control apparatus for automotive vehicles. The apparatus, while providing constant speed control and headway distance control, controls a driving force so as to achieve a target speed when a brake is not operated and prevents the driving force from being applied when the brake is operated.

A vehicle running control apparatus such as that disclosed in the aforementioned publication, however, controls the driving force so as to restore the vehicle speed to the target level without clearly identifying a driver's intention, when the condition of brake operation is switched from being operated to not being operated. This gives a driver a feeling that the vehicle is slow to follow, or a sense of a timing lag and awkwardness. In addition, this could give the driver a sense of uneasiness because of the vehicle being accelerated at timing not exactly the driver expects.

### SUMMARY OF THE INVENTION

It is therefore an object of the present invention to provide an automatic running control method and system for automotive vehicles that are capable of performing acceleration that properly reflects the intention of the driver when the condition of brake operation is switched from being operated to not being operated.

To achieve the foregoing object, a vehicle automatic running control method according to one aspect of the present invention that performs a constant speed control for maintaining a preset target vehicle speed and that performs a headway distance control so as to achieve a preset value when the headway distance between a host vehicle and a preceding vehicle is the preset value or less is characterized in that, when a brake operation is performed by the driver, a speed at which the vehicle speed is restored to the target level can be varied in accordance with a rate at which a brake pedal release operation that shifts the condition of brake operation from being operated to not being operated is performed.

The speed at which the vehicle speed is restored to the target level can be varied after the brake operation has been performed during the constant speed control or the headway distance control. During the headway distance control is commonly applicable to when the preceding vehicle no longer exists on the host vehicle lane immediately after the brake operation.

The rate at which the brake pedal is released can be obtained in accordance with a rate at which a braking force decreases (for example, a gradient of a master cylinder pressure during pressure reduction) during the shift in the condition of brake operation from being operated to not being operated.

A vehicle automatic running control system according to another aspect of the present invention including a constant speed control means that controls the vehicle speed to keep a preset target vehicle speed and a headway distance control means that controls a headway distance between a host vehicle and a preceding vehicle to keep a predetermined value is characterized by comprising at least two different means. One can be a means for detecting a brake operation performed by a driver. The other can be a correction means that, if the brake operation performed by the driver is detected, can vary the speed at which the vehicle speed is restored to the target level in accordance with a rate at which a brake pedal release operation that shifts the condition of brake operation from being operated to not being operated is performed.

Alternatively, a vehicle automatic running control system according to another aspect of the present invention including a constant speed control means that controls a vehicle speed to keep a preset first target vehicle speed and a headway distance control means that controls a headway distance between a host vehicle and a preceding vehicle to keep a predetermined value is characterized by comprising at least two different means. One can be a means for detecting a brake operation performed by a driver. The other can be a correction means that performs at least two different steps of operation. Specifically, if the brake operation performed by the driver is detected, the correction means can determine a second target vehicle speed in accordance with a rate at which a brake pedal release operation that shifts the condition of brake operation from being operated to not being operated is performed. The correction means can then increase the speed of the host vehicle up to the first target vehicle speed, while sequentially obtaining the second target vehicle speed every control timing.

The vehicle automatic running control system including a mode setting means is characterized in that, if a mode is not set by the mode setting means, the change of the vehicle speed in accordance with the rate at which the brake pedal release operation is performed can be canceled.

An ACC, or adaptive cruise control, controller according to another aspect of the present invention including a control mode selector means that selects either the constant speed control means or the headway distance control means depending on whether or not the headway distance is a predetermined value or more is characterized in that, when a brake pedal is operated, a speed at which the vehicle speed is restored to the target level can be obtained in accordance with a rate at which a brake pedal release operation that shifts the condition of brake operation from being operated to not being operated is performed.

According to the present invention, it is possible to vary the speed at which the vehicle speed can be restored from the level decelerated during operation of the brake to the target level set by the driver in accordance with the rate at which the brake pedal is released when the condition of brake operation is shifted from that being operated to that not being operated. This allows the vehicle to be accelerated at a rate corresponding to what the driver expects. The rate at which the brake pedal is released when the condition of brake operation is shifted from that being operated to that not being operated means whether the driver who depresses the brake pedal releases it slowly or quickly. This quickness of shifting motion may be said to be a driver's indication of the intention to quickly accelerate the vehicle.

### BRIEF DESCRIPTION OF THE DRAWINGS

Other objects and advantages of the invention will become apparent from the following description of embodiments with reference to the accompanying drawings in which:
Fig. 1 is a control block diagram of an ACC unit according to an embodiment of the present invention;
Fig. 2 is a configuration diagram showing a vehicle automatic running control system according to the present invention;
Fig. 3 is a diagram illustrating changes in brake operations and vehicle speed according to a first embodiment according to the present invention;
Fig. 4 is a diagram illustrating characteristics of deceleration in the operations shown in Fig. 3;
Fig. 5 is a diagram illustrating characteristics of acceleration in the operations shown in Fig. 3;
Fig. 6 is a diagram illustrating changes in brake operations and vehicle speed according to a second embodiment according to the present invention;
Fig. 7 is a diagram illustrating characteristics of the target vehicle speed deceleration rate in operations shown in Fig. 6;
Fig. 8 is a diagram illustrating characteristics of the target vehicle speed acceleration rate in operations shown in Fig. 6;
Fig. 9 is a flowchart of control procedures performed by the ACC unit according to the first embodiment of the present invention;
Fig. 10 is a sequel to the flowchart shown in Fig. 9;
Fig. 11 is a flowchart of control procedures performed by the ACC unit according to the second embodiment of the present invention; and
Fig. 12 is a sequel to the flowchart shown in Fig. 11.

### DETAILED DESCRIPTION OF THE PREFERRED EMBODIMENTS

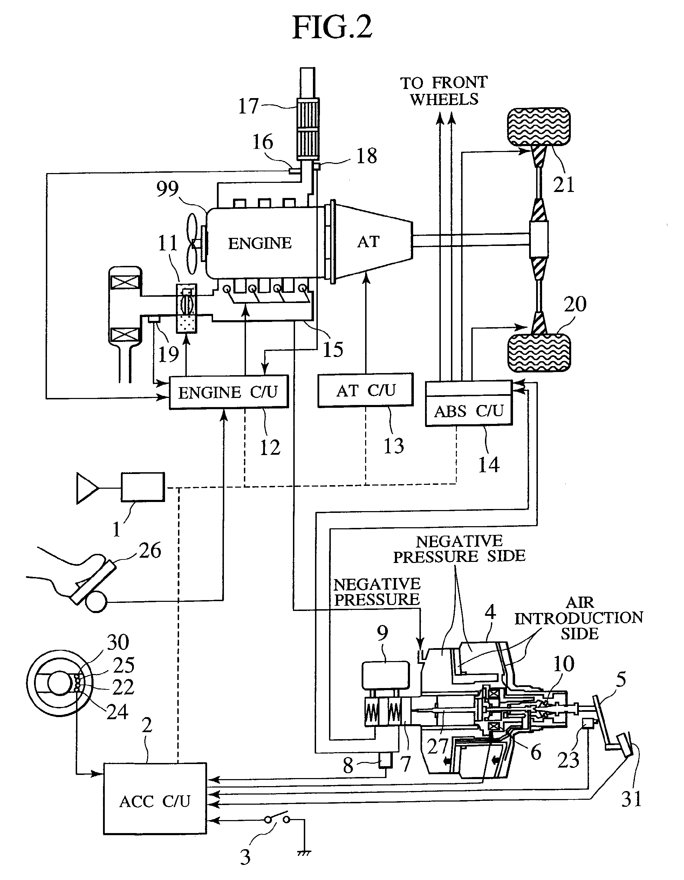

Fig. 2 is a configuration diagram showing a vehicle automatic running control system according to a preferred embodiment of the present invention. Information on a headway distance from a preceding vehicle, a relative speed, and a yaw rate of a host vehicle is sent from a radar 1 by way of communication lines (dotted line) to an ACC (adaptive cruise control) unit 2. The ACC unit 2 provides a feedback control based on these pieces of information by adjusting an output from an engine 99 so as to maintain a predetermined vehicle speed for the host vehicle. The radar 1 may be either one of the following two types. One emits forward a laser and receives a wave reflected off the preceding vehicle. The other transmits forward a radio wave of extremely-high frequencies and receives a wave reflected off the preceding vehicle.

When the headway distance between the host vehicle and the preceding vehicle becomes a predetermined value or less, the ACC unit 2 decreases the output from the engine 99. If it does not provide sufficient deceleration, the unit applies a current to a solenoid (solenoid valve) 6 of a brake booster 4 so as to apply an automatic brake, thereby maintaining a predetermined headway distance.

The force of the brake can be known by detecting a master cylinder pressure P using a pressure sensor 8. When the current is applied to the solenoid (solenoid valve) 6 to open a valve 10, admitting air into the brake booster 4. This produces a differential pressure relative to a negative pressure introduced in the brake booster 4 through an intake pipe 15 of the engine. This causes an output rod 27 to push the piston of a master cylinder 7. As a result, the boosted master cylinder pressure is introduced to respective brake calipers of front wheels and rear wheels by way of an ABS unit 14, causing each brake pad to push each brake disc. Thus, the brake is applied.

An engine control unit 12 controls an electronically controlled throttle valve 11 based on a torque request command transmitted from the ACC unit 2 over the communication line, thereby increasing or decreasing the engine output.

An AT control unit 13 controls a gear position of an automatic transmission. This AT control unit 13 sends information on the vehicle speed and the AT gear position of the host vehicle to the ACC unit 2 over the communication line. This allows the ACC unit 2 to provide constant speed control (or automatic cruise) and headway distance control.

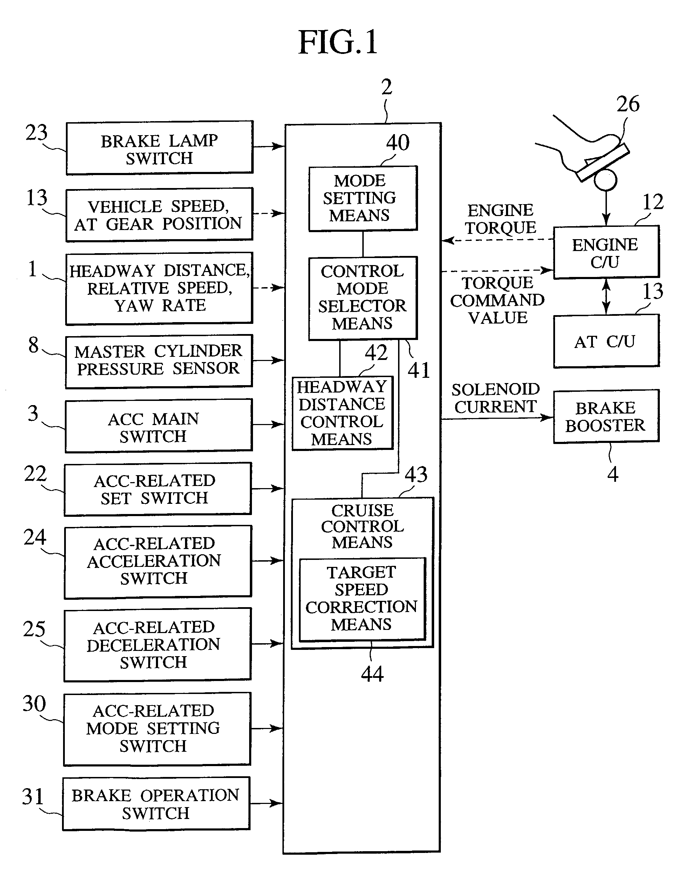

Fig. 1 is a control block diagram of the ACC unit 2. The ACC unit 2 receives information or signals from a brake lamp switch 23, a sensor 13 that detects the vehicle speed and the AT gear position of the host vehicle, and the radar 1 that measures the headway distance from the preceding vehicle, the relative speed and the yaw rate through the communication lines (dotted lines) and wiring. In addition the ACC unit 2 receives signals of a master cylinder pressure sensor 8, throttle opening, and an ACC main switch 3 and an ACC-related setting switch 22.

On the basis of the reception of the information and the signals, the ACC unit 2 transmits a torque command value to the engine control unit 12 so as to adjust the engine output and thus maintain the vehicle speed set by the driver. If the headway distance becomes shorter than the predetermined value because of a slow-running preceding vehicle, the engine output is decreased. If that is not sufficient, an automatic brake is applied by applying a current to the solenoid 6 of the brake booster 4. This keeps the headway distance constant. While controlling the engine output to the torque command value, the engine control unit 12 transmits information required for gear position control to the AT control unit 13.

The ACC main switch 3 is a main switch used to perform the constant speed control (automatic cruise) and the headway distance automatic control. This is not, however, the only single source to start the control. In addition to this switch for starting the control, the driver operates the ACC-related set switch 22, an acceleration switch 24, and a deceleration switch 25 attached on a steering wheel so as to set a vehicle speed. Each press of the acceleration switch 24 increases a target set vehicle speed by a predetermined margin. Each press of the deceleration switch 25 decreases the target set vehicle speed by a predetermined margin. In addition, a mode-setting switch 30 is provided so as to prevent the automatic cruise mode and the headway distance control mode from being canceled even when a brake pedal 5 is depressed.

The ACC unit 2 of the embodiment is provided with a constant speed control, or automatic cruise, means 43 that provides control to keep the host vehicle speed at a vehicle speed set by the driver. In addition, the ACC unit 2 is provided with a headway distance control means 42 that automatically maintains a predetermined headway distance, when the headway distance from the preceding vehicle is reduced because the preceding vehicle travels at a speed slower than the vehicle speed set for the host vehicle. Moreover, the ACC unit 2 is provided with a control mode selector means 41 for providing the control while appropriately selecting either the headway distance control means 42 or the automatic cruise means 43.

The ACC unit 2 is further provided with a mode setting means 40 that determines whether to set or cancel the automatic cruise control and headway distance control. The mode setting means 40 is set when the driver turns ON the ACC main switch 3. The mode setting means 40 also retains the automatic cruise mode and headway distance control mode without canceling them even when the brake pedal 5 is depressed. All the control means may be combined with one another into a single function as an automatic running control means.

The control mode selector means 41 receives information from the radar 1 and selects the control mode appropriately. Specifically, the control mode selector means 41 captures the information on the headway distance from the preceding vehicle, the relative speed, and a bearing angle, and then determines whether or not the preceding vehicle travels in the lane in which the host vehicle travels. If the preceding vehicle travels on the same lane and if the headway distance therefrom is a predetermined value (L0) or less, the selector means 41 switches the control to that using the headway distance control means 42. If the preceding vehicle does not travels in the lane in which the host vehicle travels, or the headway distance therefrom exceeds the predetermined value (L0), the selector means 41 switches the control to that using the automatic cruise means 43.

A target speed correction means 44 of the embodiment functions as follows: When a brake operation performed by the driver is detected, the correction means 44 obtains an acceleration rate (dV/dt) made to bring the vehicle speed back to a target level when the condition of that brake operation is shifted from being operated to not being operated based on a pressure reduction rate (ΔP/Δt) of the master cylinder. On the basis of this acceleration rate, the vehicle speed is sequentially changed until a predetermined target speed (V0) is achieved. The target speed correction means 44 is incorporated in the automatic cruise means 43 in Fig. 1. It is nonetheless possible to configure the correction means 44 as an independent functional unit.

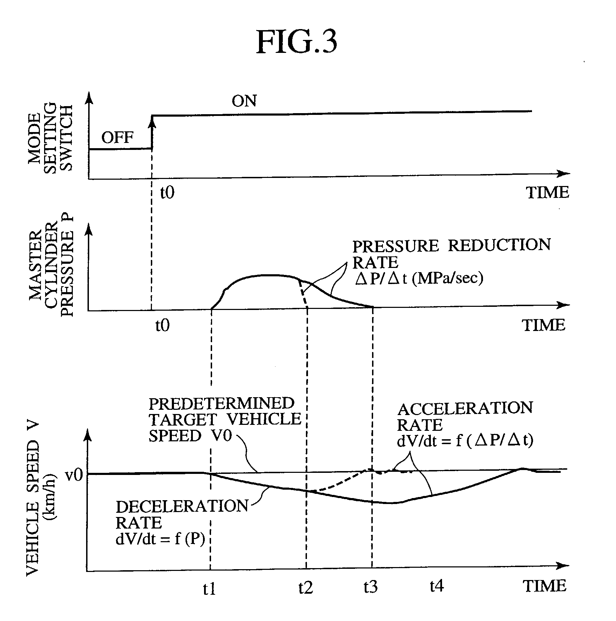

The operation of the embodiment will be described in details in the following. Fig. 3 is a diagram illustrating the operational principle of a first embodiment according to the present invention. At time t0, the driver changes the position of the mode setting switch 30 from OFF to ON. Turning ON the mode setting switch 30 sets the vehicle running auto control mode, in which the cruise control or the headway distance control is alternately selected.

When the driver starts depressing the brake pedal 5 at a time t1, the vehicle is then decelerated at a deceleration rate dV/dt corresponding to a master cylinder pressure P generated at that particular timing. The rate of deceleration can be adjusted with the degree of a braking force and an engine driving force being decreased. When the brake pedal is thereafter completely released by time t2 or t3, the pressure reduction rate (ΔP/Δt) of the master cylinder pressure P varies according to the rate of releasing the brake pedal (rate of pedal releasing operation) applicable at that time.

Referring to Fig. 3, the dotted line shows the change when the brake pedal is quickly released, while the solid line shows that when the brake pedal is slowly released. A vehicle driving force is controlled so that the vehicle speed is restored to the predetermined target speed (V0) at the acceleration rate (dV/dt) to bring the vehicle speed back to the target, i.e., at the restoring acceleration rate (dV/dt) in accordance with the rate of releasing the brake pedal. This restoring acceleration rate dV/dt is linear to the pressure reduction rate (ΔP/Δt), that is, dV/dt = f (ΔP/Δt).

As described in the foregoing, the vehicle speed is restored to the predetermined target speed V0 at the acceleration rate dV/dt in accordance with the rate of the brake pedal being released by the driver. This contributes to the driver's feeling of acceleration exactly as expected by the driver. Moreover, the vehicle can be decelerated or accelerated simply through operation of the brake pedal exactly according as the driver expects, enhancing convenience. In addition, the control operation very well represents the driver's expectation, since the vehicle is accelerated slowly when the brake pedal is released slowly and quickly when the brake pedal is released quickly. This eliminates a sense of uneasiness on the part of the driver during acceleration.

In embodiments according to the present invention, the master cylinder pressure is used as a physical quantity equivalent to the braking force. Instead, it is nonetheless possible to use a pedal effort sensor signal or a depression amount sensor signal as applicable to the brake pedal found in an electric brake system. The electric brake system generates the braking force electrically by means of a motor or a hydraulic pump in accordance with the magnitude of the pedal effort sensor signal or the depression amount sensor signal of the brake pedal.

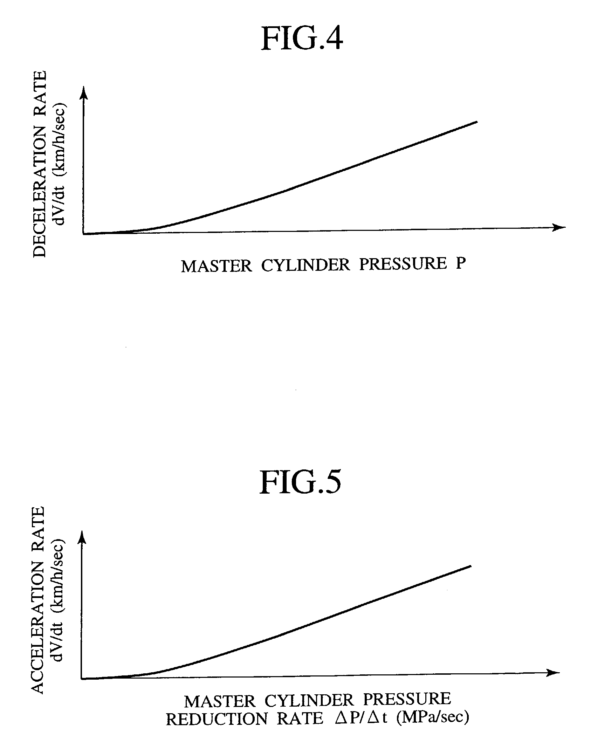

Fig. 4 is a diagram illustrating characteristics of the vehicle deceleration rate dV/dt in accordance with the master cylinder pressure P. The vehicle deceleration rate dV/dt is substantially proportional to the master cylinder pressure P. This represents the fact that the vehicle deceleration rate dV/dt is based on the braking force and the braking force is expressed as pressure P x pressure area x coefficient of friction.

Fig. 5 is a diagram illustrating characteristics of the vehicle acceleration rate dV/dt in accordance with the pressure reduction rate ΔP/Δt of the master cylinder pressure P. The vehicle acceleration rate dV/dt is substantially proportional to the pressure reduction rate ΔP/Δt of the master cylinder pressure P. The pressure reduction rate ΔP/Δt is the speed at which the braking force is released, substantially proportional to the rate of releasing the brake pedal.

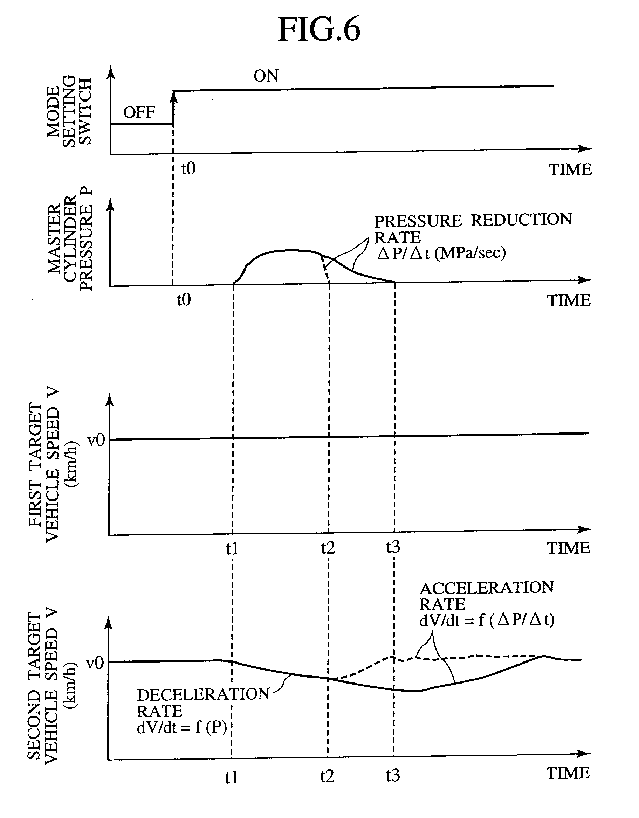

Fig. 6 is a diagram illustrating operations of a second embodiment according to the present invention. According to the second embodiment, the target speed previously set in the cruise control means 43 is designated as a first target vehicle speed. A plurality of target vehicle speed values, by way of which the vehicle speed is restored to the first target vehicle speed V0 for the period of time that begins with the start of the brake operation and ends with the brake operation to reach the first target vehicle speed V0, are designated as a second target vehicle speed. The second target vehicle speed is updated every control timing.

Depression of the brake pedal is started at a time t1. The second target vehicle speed is then decelerated with the target vehicle speed deceleration rate dV/dt in accordance with the master cylinder pressure P. The second target vehicle speed is thereafter increased at every control cycle so as to allow the vehicle speed to be restored to the first target vehicle speed V0 as detailed in the following. Specifically, when the brake pedal is released by a time t2 or t3, the second target vehicle speed is increased at the restoring acceleration rate (the target vehicle speed acceleration rate dV/dt) in accordance with the pressure reduction rate ΔP/Δt of the master cylinder pressure P that is substantially directly proportional to the rate of releasing the brake pedal. The driving force and the braking force are adjusted so as to bring the vehicle speed to the second target vehicle speed. The dotted line indicates when the rate of releasing the brake pedal is high, while the solid line indicates that the rate of releasing the brake pedal is low.

As described in the foregoing, the vehicle speed is restored to the predetermined first target speed at the restoring acceleration rate (and thus the second target vehicle speed) in accordance with the rate of the brake pedal being released by the driver. This contributes to the driver's feeling of acceleration exactly as expected by the driver. Moreover, the vehicle can be decelerated or accelerated simply through operation of the brake pedal, enhancing convenience. In addition, the control operation very well represents the driver's expectation, since the vehicle is accelerated slowly when the brake pedal is released slowly and quickly when the brake pedal is released quickly. This eliminates a sense of uneasiness on the part of the driver during acceleration.

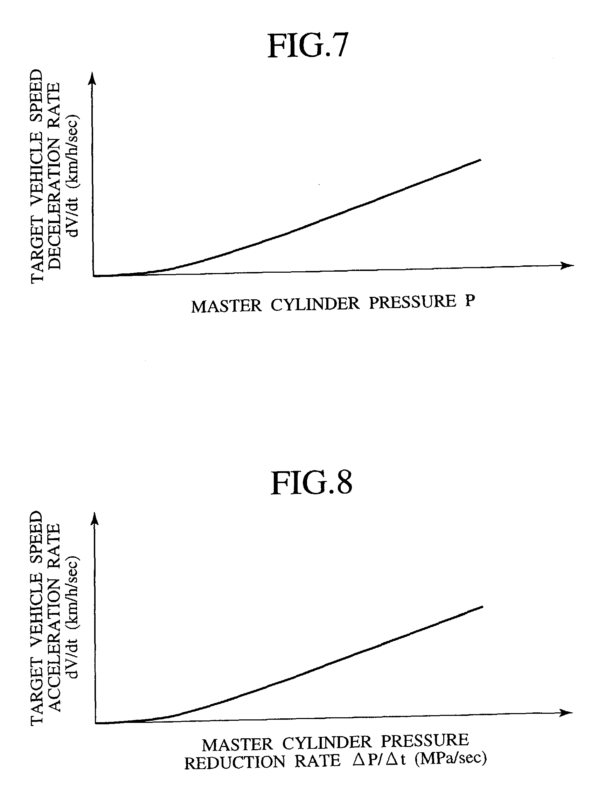

Fig. 7 is a diagram illustrating characteristics of the target vehicle speed deceleration rate dv/dt in accordance with the master cylinder pressure P. The target vehicle speed deceleration rate dV/dt is substantially directly proportional to the master cylinder pressure P. Fig. 8 is a drawing showing characteristics of the target vehicle speed acceleration rate dV/dt in accordance with the pressure reduction rate ΔP/Δt of the master cylinder pressure P. The target vehicle speed acceleration rate dV/dt is substantially directly proportional to the master cylinder pressure P.

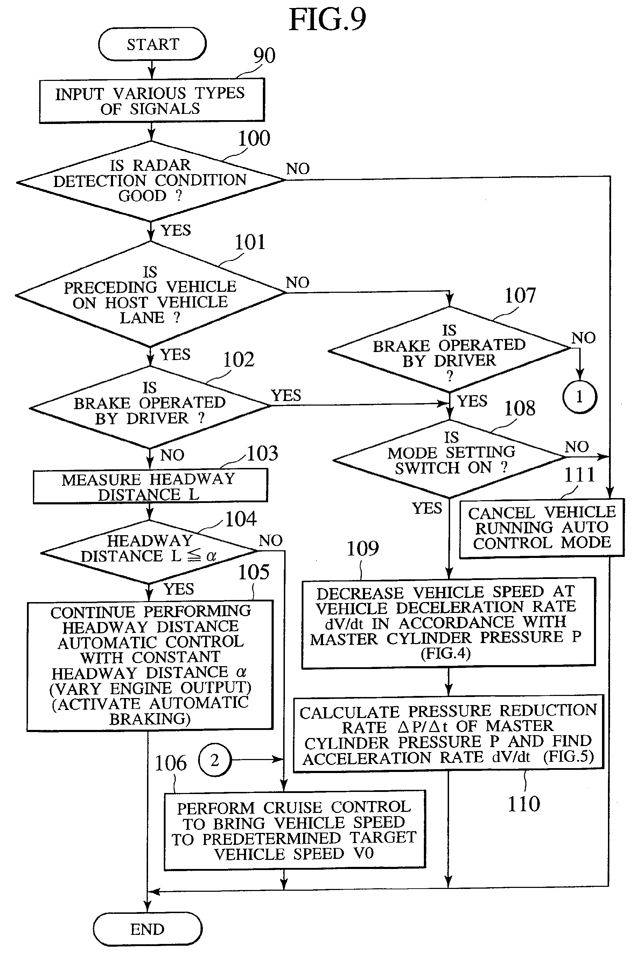

Fig. 9 is a flowchart of control procedures performed by the ACC unit according to the first embodiment of the present invention. The control shown in this flowchart is repeatedly started, for example, every 10 ms, each being processed under the current conditions.

In step 90, the various types of signals shown in Fig. 1 are input (detected). The control unit then detects the switch signals, master cylinder pressure, a headway distance, relative speed, and the position of the mode setting switch.

In step 100, it is determined whether or not a radar detection condition is good. If it is determined that radar detection is not good, the vehicle running automatic control mode is canceled in step 111. Once this mode is canceled, neither the cruise control nor the headway distance control is performed until the driver turns ON the ACC main switch 3 again. If it is determined that radar detection is good, it is then determined in step 101 whether or not the preceding vehicle is on the lane in which the host vehicle runs.

If it is determined that the preceding vehicle is in the host vehicle lane, it is determined in step 102 whether or not a brake operation is performed by the driver. If it is determined that the brake operation is not performed, a headway distance L is measured in step 103. It is then determined in step 104 whether the measured headway distance L is a predetermined distance α or less. If it is determined that the measured headway distance is the predetermined distance α or less, a headway distance automatic control with a constant headway distance α is performed in step 105 and the engine output is varied and automatic braking is activated as may be necessary. If it is determined in step 104 that the measured headway distance L exceeds the predetermined distance α, the control proceeds to step 106 of ②, in which cruise control is performed to target the vehicle speed at a predetermined target vehicle speed. As described in the foregoing, either the cruise control or the headway distance control is performed if the driver does not perform the brake operation.

If it is determined in step 102 that the driver performs the brake operation, for example, if the preceding vehicle applies a sudden brake, it is determined in step 108 whether the mode setting switch 30 is ON or OFF. If it is determined in step 101 that there is no preceding vehicle in the host vehicle lane, it is determined in step 107 whether or not a brake operation is performed by the driver. If it is determined that the driver does not perform the brake operation, the control then proceeds to ①. If it is determined that the driver performs the brake operation, it is then determined in step 108 whether the mode setting switch 30 is ON or OFF. A brake operation switch 31 is used to determine whether or not the driver performs the brake operation. Specifically, the brake operation switch 31 turns ON when the driver depresses the brake pedal 5.

If it is determined in step 108 that the mode setting switch is not ON, the vehicle running automatic control mode is canceled in step 111. If it is determined in step 108 that the mode setting switch is ON, the vehicle speed is decreased at the vehicle deceleration rate dV/dt in accordance with the master cylinder pressure P (Fig. 4) in step 109. Then in step 110, the pressure reduction rate ΔP/Δt of the master cylinder pressure P is calculated and the acceleration rate of the vehicle dV/dt is thereby obtained (Fig. 5). The vehicle acceleration rate dV/dt is linear to the pressure reduction rate (ΔP/Δt) (dV/dt = f(ΔP/Δt)). The acceleration rate dV/dt is updated and temporarily stored in memory.

The pressure reduction rate ΔP/Δt of the master cylinder pressure P is calculated starting with the timing, at which the pressure P starts decreasing in Fig. 3. It is actually obtained from results of calculated values taken a plurality number of times at Δt intervals. More specifically, The pressure reduction rate ΔP/Δt is obtained as a gradient of a pressure P curve over a period of time with a smaller number of measurement times for the dotted line depicting a higher rate of change and that with a larger number of measurement times for the solid line depicting a lower rate of change.

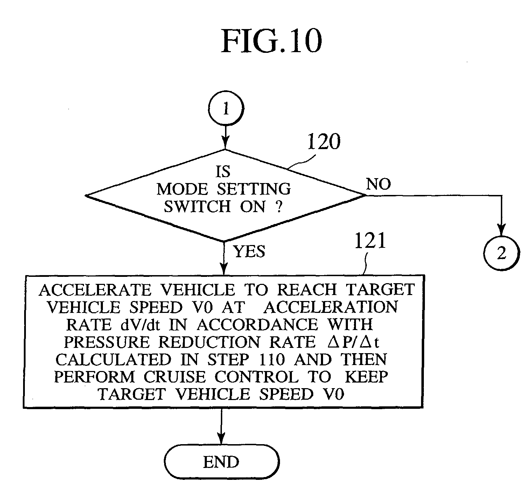

Fig. 10 is a sequel to the flowchart shown in Fig. 9. If it is determined in the current step 107 that the driver does not perform the brake operation with the acceleration rate calculated in step 110 of the preceding control timing, the control proceeds to ① shown in Fig. 10. In step 120, it is determined whether the mode setting switch is ON or not. If it is determined that the switch is ON, the vehicle speed is accelerated at the acceleration rate dV/dt previously calculated in step 110 to restore the vehicle speed to a predetermined target vehicle speed V0. If it is determined that the mode setting switch is OFF, the control proceeds to ② shown in Fig. 9. Then, in step 106, the cruise control is performed to bring the vehicle speed to the predetermined target vehicle speed V0.

In the aforementioned control flow, cases that satisfy the condition that "the driver performs a brake operation" in steps 102 and 107 include the following. That is, (1) before a sharp turn (brake is applied regardless of whether there is a preceding vehicle or not); (2) the preceding vehicle applies a sudden brake during the headway distance control; and (3) a vehicle on an adjacent lane cuts in sharply ahead of the host vehicle. In any of these cases, neither the headway distance control nor the cruise control is effective, causing the driver of the host vehicle to continue depressing the brake pedal. Then, the control proceeds to steps 109 and 110. If there is no preceding vehicle running on the host vehicle lane when the brake is released, operations proceed from step 107 by way of ① to step 121.

The relationship between the control operation steps shown in Figs. 9 and 10 and the control means shown in Fig. 1 will be explained. The mode setting means 40 corresponds to steps 108, 111, and 120. The control mode selector means 41 mainly corresponds to steps 100 through 104. The headway distance control means 42 corresponds to step 105, and the cruise control means 43 corresponds to step 106. Steps 107, 109, 110, and 121 correspond to the correction means 44.

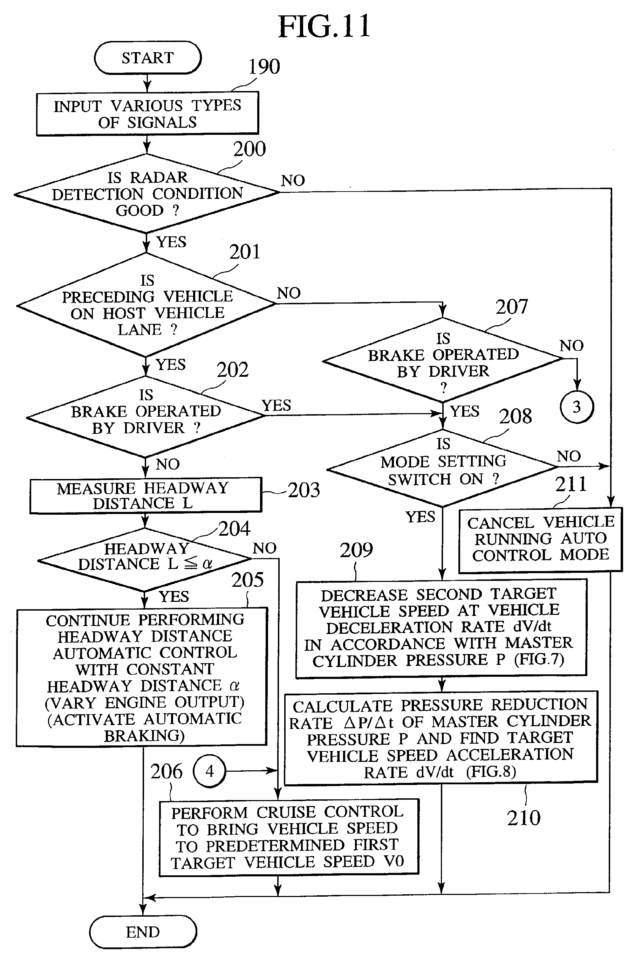

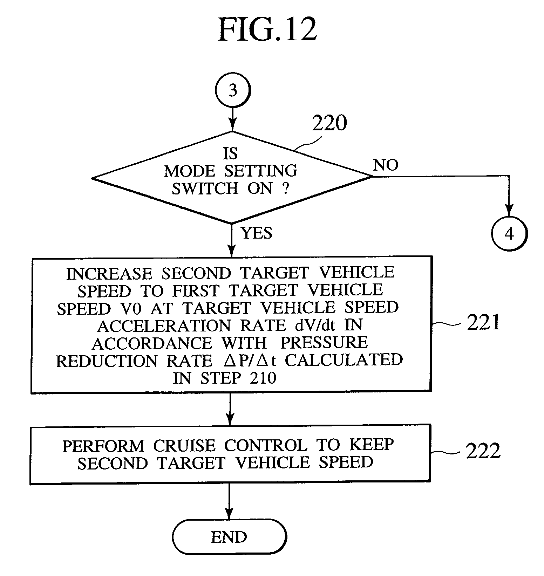

Fig. 11 is a flowchart showing control procedures performed by the ACC unit according to the second embodiment of the present invention. Fig. 12 is a sequel to the flowchart shown in Fig. 11.

In step 190, the various types of signals shown in Fig. 1 are input (detected). The control unit then detects the switch signals, master cylinder pressure, a headway distance, relative speed, and the position of the mode setting switch.

In step 200, it is determined whether or not a radar detection condition is good. If it is determined that radar detection is not good, the vehicle running auto control mode is canceled in step 211. Once the mode is canceled, neither the cruise control nor the headway distance control is performed until the driver turns ON the ACC main switch 3 again.

If it is determined that radar detection is good, it is then determined in step 201 whether or not the preceding vehicle is in the lane in which the host vehicle runs. If it is determined that the preceding vehicle is in the host vehicle lane, it is determined in step 202 whether or not a brake operation is performed by the driver. If it is determined that the brake operation is not performed, a headway distance L is measured in step 203. It is then determined in step 204 whether the measured headway distance L is a predetermined distance α or less. If the measured headway distance L is a predetermined distance α or less, a headway automatic control with a constant headway distance α is performed in step 205. If the measured headway distance L is not a predetermined distance α or less, the control proceeds to step 206 of ④, in which a cruise control is performed to target the vehicle speed at a predetermined target vehicle speed V0.

If the brake operation is performed by the driver in step 202, it is then determined in step 208 whether the mode setting switch is ON or OFF. If the preceding vehicle is not in the lane in which the host vehicle runs, it is determined in step 207 whether or not the driver performs a brake operation. If the driver performs a brake operation, it is then determined in step 208 whether the mode setting switch is ON or OFF.

If the mode setting switch is OFF, the vehicle running automatic control mode is canceled in step 211. If the mode setting switch is ON, the second target vehicle speed is decreased at the vehicle deceleration rate dV/dt in accordance with the master cylinder pressure P in step 209. Then in step 210, the pressure reduction rate ΔP/Δt of the master cylinder pressure P is calculated and the target vehicle speed acceleration rate dV/dt (= f(ΔP/Δt)) is obtained. The pressure reduction rate ΔP/Δt is calculated in the same manner as in Fig. 9.

If it is determined that the driver does not perform a brake operation (step 207) in the next control procedure after the acceleration rate dV/dt has been calculated, the control proceeds to ③. In step 220 of ③, it is determined whether or not the mode setting switch is ON. If the mode setting switch is ON, the second target vehicle speed is increased until it reaches the predetermined first target vehicle speed V0 at the target vehicle speed acceleration rate dV/dt in accordance with the pressure reduction rate ΔP/Δt of the master cylinder pressure P in step 221. In the subsequent step 222, the vehicle speed is controlled at the second target vehicle speed. If the setting switch is OFF in step 220, the control proceeds to ④ and the cruise control is provided to maintain the predetermined first target vehicle speed V0 in step 206.

As is known from the foregoing descriptions, an equivalent basic principle applies to the first and the second embodiment with control viewpoints changed between the two. In the first embodiment of the present invention, control is provided so as to restore the vehicle speed to the target speed V0 by providing acceleration every control timing at the acceleration rate dV/dt in accordance with the rate of releasing the brake pedal. The second embodiment, on the other hand, works as follows. That is, the second target vehicle speed is obtained in accordance with the acceleration rate dV/dt every control timing and control is provided so as to keep the second target vehicle speed updated until it reaches the first target vehicle speed V0.

According to the present invention, the vehicle speed is restored to the predetermined target speed at the acceleration rate to bring the vehicle speed back to the target in accordance with the rate of releasing the brake pedal. This contributes to the driver's feeling of acceleration exactly as expected by the driver. Moreover, the vehicle can be decelerated or accelerated simply through operation of the brake pedal, which enhances convenience. In addition, the control operation very well represents the driver's expectation, since the vehicle is accelerated slowly when the brake pedal is released slowly and quickly when the brake pedal is released quickly. This eliminates a sense of uneasiness on the part of the driver during acceleration to bring the vehicle speed back to the target.

While the invention has been described in its preferred embodiments, it is to be understood that the words which have been used are words of description rather than limitation and that changes within the purview of the appended claims may be made without departing from the true scope and spirit of the invention in its broader aspects.

## Claims

1. A vehicle automatic running control method that performs constant speed control for maintaining a predetermined target vehicle speed and, when a headway distance between a host vehicle and a preceding vehicle is a predetermined value or less, performs headway distance control so as to achieve the predetermined value,
wherein, when the brake operation is performed by the driver, a speed at which the vehicle speed is restored to the target value is varied in accordance with a rate at which a brake pedal release operation that shifts the condition of brake operation from being operated to not being operated is performed.

2. The vehicle automatic running control method according to claim 1, wherein the speed at which the vehicle speed is restored to the target value is varied after the brake operation has been performed during the constant speed control or the headway distance control.

3. The vehicle automatic running control method according to claim 1 or 2, wherein the rate at which the brake pedal (5) is released is obtained in accordance with a rate at which a braking force decreases during the shift in the condition of brake operation from being operated to not being operated.

4. A vehicle automatic running control system, comprising:
a constant speed control means (43) for controlling a vehicle speed to keep a predetermined target vehicle speed;
a headway distance control means (42) for controlling a headway distance between a host vehicle and a preceding vehicle to keep a predetermined value;
a means for detecting a brake operation performed by a driver; and
a correction means (44) for, if the brake operation performed by the driver is detected, varying a speed at which the vehicle speed is restored to the target value in accordance with a rate at which a brake pedal release operation that shifts the condition of brake operation from being operated to not being operated is performed.

5. The vehicle automatic running control system according to claim 4, wherein the correction means obtains the speed at which the vehicle speed is restored to the target value in accordance with the rate of the brake pedal release operation, after the brake pedal release operation that has been performed during the constant speed control or the headway distance control.

6. A vehicle automatic running control system comprising:
a constant speed control means (43) for controlling a vehicle speed to keep a first predetermined target vehicle speed;
a headway distance control means (42) that controls a headway distance between a host vehicle and a preceding vehicle to keep a predetermined value;
a means for detecting a brake operation performed by a driver; and
a correction means (44) for, when the brake operation performed by the driver is detected, determining a second target vehicle speed in accordance with a rate at which a brake pedal release operation that shifts the condition of brake operation from being operated to not being operated is performed, and increasing the speed of the host vehicle up to the first target vehicle speed, while sequentially obtaining the second target vehicle speed every control timing.

7. The vehicle automatic running control system according to claim 4, 5, or 6, further comprising a mode setting means (40); wherein, if a mode is not set by the mode setting means (40), the change of the vehicle speed in accordance with the rate at which the brake pedal release operation is performed is canceled.

8. An adaptive cruise controller (2), comprising:
a constant speed control means (43) for controlling a vehicle speed to keep a predetermined target vehicle speed;
a headway distance control means (42) for controlling a headway distance between a host vehicle and a preceding vehicle to keep a predetermined value;
a control mode selector means (41) for selecting either the constant speed control means (43) or the headway distance control means (42) depending on whether or not the headway distance is a predetermined value or more; and
a target speed correction means (44) for, when a brake pedal (5) is operated, obtaining a speed at which the vehicle speed is restored to the target value in accordance with a rate at which a brake pedal release operation that shifts the condition of brake operation from being operated to not being operated is performed.
